# EUROPÄISCHE PATENTANMELDUNG

(11) **EP 2 990 931 A1**
(43) Veröffentlichungstag der Anmeldung: **02.03.2016**
(21) Anmeldenummer: 14182311.2
(22) Anmeldetag: 26.08.2014
(51) Int. Cl.: G06F 3/0489, G06F 3/0481, H04N 21/422, H04N 21/431, H04N 5/44

(54) **Verfahren zur Steuerung eines Eingabezeigers**

(71) Anmelder: NetRange MMH GmbH, 20354 Hamburg (DE)
(72) Erfinder: Wendt, Jan, 20251 Hamburg (DE)
(74) Vertreter: Glück Kritzenberger Patentanwälte PartGmbB

(57) **Zusammenfassung**

Die Erfindung betrifft eine Visuelle Wiedergabeeinrichtung (10) mit einem visuellen Wiedergabemedium (12), einer Steuerung (28), einer mit der Steuerung kommunizierenden Fernbedienung (24), mittels welcher ein Eingabezeiger (14) auf dem Wiedergabemedium zwischen Positionsfeldern steuerbar ist, wobei die Fernbedienung wenigstens eine erste Steuertaste (16, 18, 20, 22) hat, über deren Signal der Eingabezeiger in den Positionsfeldern um jeweils wenigstens eine Position in eine Richtung bewegt werden kann, und wenigstens eine zweite Steuertaste, über deren Signal der Eingabezeiger in den Positionsfeldern um jeweils wenigstens eine Position in die entgegengesetzte Richtung bewegt werden kann. Die Steuerung (28) hat eine Schaltung zur Darstellung einer graphischen Eingabeschnittstelle (30) auf dem Wiedergabemedium in unmittelbarer Nähe zum Eingabezeiger. Die Eingabeschnittstelle ist in Abhängigkeit von der Betätigung der ersten und/oder zweiten Steuertasten aktivierbar und weist Eingabefelder (32, 34, 36, 38, 40) auf, die mit einer Steueraktion, insbesondere für die Position des Eingabezeigers auf dem Wiedergabemedium verknüpft sind. Die Eingabefelder sind durch den Eingabezeiger navigierbar und/oder aktivierbar. Dies ermöglicht ein leichtes Navigieren auf einem interaktiven Fernseher oder Internet-TV.

## Beschreibung

Die vorliegende Erfindung betrifft eine visuelle Wiedergabeeinrichtung und ein Verfahren zur Steuerung eines Eingabezeigers auf dem Wiedergabemedium einer visuellen Wiedergabeeinrichtung.

Die US 6,246,411 B 1 zeigt ein Verfahren zur Steuerung einer Eingabeschnittstelle in Form einer Drag-Toolbar in Verbindung mit einem Eingabezeiger, d.h. einem Cursor. Die Eingabeschnittstelle folgt dem Cursor und kann dazu verwendet werden, unterschiedliche Steuerbefehle auszuüben, unter anderem auch Navigationsbefehle. Die Eingabeschnittstelle wird nur aktiviert, wenn eine Drag-Operation ausgeführt wird, woraufhin der Benutzer die Möglichkeit hat, die Toolbar in Verbindung mit Steuerbefehlen zu nutzen, die mit dem Drag-Vorgang in Verbindung stehen.

Während eine derartige Technik gut für Computer nutzbar ist, bei denen z.B. durch die Verwendung einer Computermaus graphische Tätigkeiten eines Eingabezeigers in Verbindung mit einer Drag-Operation vorkommen, ist diese Technologie nicht nutzbar im Zusammenhang mit einer visuellen Wiedergabeeinrichtung, deren Eingabezeiger über Steuertasten einer Fernbedienung und nicht über eine Maus gesteuert wird.

Es ist daher Aufgabe der Erfindung, eine visuelle Wiedergabeeinrichtung zu schaffen, die die Möglichkeit zur erleichterten Navigation in verschiedenen Ebenen unter Verwendung der limitierten Möglichkeiten einer simplen Fernbedienung vorsieht, die lediglich Steuertasten zum Navigieren auf einem Wiedergabemedium der Wiedergabeeinrichtung aufweist.

Die Aufgabe wird durch eine visuelle Wiedergabeeinrichtung mit den Merkmalen des Anspruchs 1 gelöst. Weiterhin wird diese Aufgabe durch ein Verfahren mit den Merkmalen des Anspruchs 10 gelöst. Vorteilhafte Weiterbildungen der Erfindung sind Gegenstand der zugeordneten Unteransprüche.

Die erfindungsgemäße visuelle Wiedergabeeinrichtung kann zum Beispiel in Art eines Fernsehers, insbesondere eines interaktiven Fernsehers, eines Smart-TVs, Internet-TVs, einer Spielekonsole oder als Video- oder Streaming-Wiedergabeeinrichtung ausgebildet sein.

Sie hat eine Steuerung und eine mit der Steuerung kabellos oder kabelgebunden kommunizierende Fernbedienung, mittels welcher ein Eingabezeiger auf einem visuellen Wiedergabemedium der Wiedergabeeinrichtung, zum Beispiel auf einem Bildschirm oder Beamer, zwischen Positionsfeldern steuerbar ist. Die Fernbedienung hat dabei wenigstens eine erste Steuertaste, über deren Signal der Eingabezeiger in den Positionsfeldern um jeweils wenigstens eine Position in eine erste Richtung, z.B. nach vorne, bewegt werden kann, und wenigstens eine zweite Steuertaste, über deren Signal der Eingabezeiger in den Positionsfeldern um jeweils wenigstens eine Position in eine der ersten Richtung entgegengesetzte zweite Richtung, z. B. zurück, bewegt werden kann.

Statt zweier Steuertasten können auch vier Steuertasten für die Bewegung des Eingabezeigers in allen Richtungen der Ebene vorgesehen sein, wobei die erste und zweite Steuertaste dann jeweils vorzugsweise durch die beiden Tasten gebildet sind, die zu einer Bewegung des Eingabezeigers in die entgegengesetzte Richtung führen. Die Steuerung hat eine Schaltung zur, vorzugsweise ständigen, Darstellung einer graphischen Eingabeschnittstelle auf dem Wiedergabemedium in unmittelbarer Nähe zum Eingabezeiger auf dem Wiedergabemedium. Diese Eingabeschnittstelle kann in Abhängigkeit von der Betätigung der ersten und zweiten Steuertasten aktiviert werden. Bei der Aktivierung springt der Eingabezeiger auf die dem Eingabezeiger folgende Eingabeschnittstelle oder die Eingabeschnittstelle wird durch die Aktivierung für den Eingabezeiger zugänglich gemacht. Daraufhin kann der Eingabezeiger innerhalb der Eingabefelder der Eingabeschnittstelle bewegt und zum Aktivieren einer mit einem Eingabefeld verknüpften Steueraktion verwendet werden.

Die Eingabeschnittstelle weist mehrere Eingabefelder auf, die mit einer Steueraktion, insbesondere für die Position des Eingabezeigers auf dem Wiedergabemedium verknüpft sind. Die Eingabefelder sind nach Aktivierung der Eingabeschnittstelle, insbesondere durch Rückbewegung des Eingabezeigers, durch die Tätigkeit des Eingabezeigers navigierbar und/oder aktivierbar. Es kann jedoch auf der Fernbedienung auch eine Aktivierungstaste, z.B. die standardmäßig vorhandene Ok-Taste zum Aktivieren der Eingabeschnittstelle oder der Steueraktion verwendet werden. Die Eingabeschnittstelle wird somit dadurch aktiviert, dass durch eine Betätigung der Steuertaste(n) der Eingabezeiger auf eines der Eingabefelder der Eingabeschnittstelle bewegt wird. Das gewünschte Eingabefeld, dem vorzugsweise eine bestimmte Navigationsaktion zugeordnet ist, kann dann durch unterschiedliche Optionen aktiviert werden, beispielsweise durch Stehenlassen des Eingabezeigers auf dem Eingabefeld eine gewisse vorgegebene Zeitspanne oder durch abermalige Betätigung einer Steuertaste oder einer Aktivierungstaste, z.B. der Ok-Taste einer Fernbedienung.

Der Vorteil der vorliegenden Erfindung liegt darin, dass bereits mit lediglich zwei Steuertasten auch einer älteren und mit wenig Funktionen ausgestatteten Fernbedienung die Aktivierung einer graphischen Eingabeschnittstelle, z.B. für eine verbesserte Navigation des Eingabezeigers in mehreren hierarchischen Ebenen (z.B. abschnittsweise, kapitelweise, seitenweise) verfügbar ist, die einen wesentlich größeren und einfachen Bewegungsspielraum des Eingabezeigers auf dem Wiedergabemedium ermöglicht, ohne zusätzliche Tasten auf der Fernbedienung zu erfordern. Durch eine definierte Betätigung der ersten und/oder zweiten Steuertaste(n) wird die Eingabeschnittstelle aktiviert, und durch den Eingabezeiger und die Steuertasten kann dann innerhalb der Eingabeschnittstelle navigiert werden und die entsprechende Navigationsfunktion für den Eingabezeiger aufgerufen werden, so zum Beispiel ein Sprung vor oder zurück in Abschnitten, Kapiteln oder Seiten eines auf dem Wiedergabemedium angezeigten Kontextes.

Um eine Fernbedienung so einfach wie möglich zu halten, wird deshalb eine Lösung bevorzugt, bei der die Eingabeschnittstelle allein durch eine definierte Betätigung der ersten und/oder zweiten Steuertaste aktiviert wird. Bevorzugt ist eine Betätigung der Steuertasten derart, dass der Eingabezeiger entgegen der Navigationsrichtung um eine Position zurückbewegt wird, womit er unmittelbar auf die Eingabeschnittstelle gelangt. Nach dieser ist der Eingabezeiger auf den Eingabefeldern navigierbar und die Eingabefelder der Eingabeschnittstelle sind für eine Steueraktion offen. Die entsprechende Steueraktion wird dann vorzugsweise dadurch realisiert, dass der Eingabezeiger auf das entsprechende Eingabefeld navigiert wird. Es kann dann z.B. eine bestimmte Zeit auf dem Eingabefeld belassen werden oder es wird eine herkömmliche Aktivierungstaste zur Aktivierung der Steueraktion verwendet, nachdem der Eingabezeiger auf ein gewünschtes Eingabefeld bewegt bzw. navigiert worden ist. Eine derartige Aktivierungstaste in Art einer "Ok"-Taste ist üblicherweise auf herkömmlichen Fernbedienungen für Videowiedergabeeinrichtungen oder Fernseher vorhanden.

Mittels der Erfindung lässt sich somit bei einer herkömmlichen Hardwareausstattung einer visuellen Wiedergabeeinrichtung, z.B. eine Fernsehers oder sonstigen Videogeräts die Erfindung allein softwaremäßig realisieren.

In einer vorteilhaften Weiterbildung der Erfindung erfolgt die Aktivierung der Eingabeschnittstelle dann, wenn die Steuerung nach oder vor einem Signal der ersten Steuertaste innerhalb eines vorgegebenen Zeitfensters ein Signal der zweiten Steuertaste empfängt. Eine derartige abwechselnde Bestätigung der ersten und zweiten Steuertaste innerhalb des vorgegebenen Zeitfensters wird damit als Trägersignal für die Aktivierung der Eingabeschnittstelle gedeutet. Anschließend kann die entsprechende Steueraktion der Eingabeschnittstelle ausgewählt werden, indem der Eingabezeiger mittels der Steuertasten auf das gewünschte Eingabefeld bewegt wird, und eventuell eine Aktivierungstaste einer Fernbedienung gedrückt wird. Auf diese Weise kann der Eingabezeiger oder auch Cursor einfach innerhalb von Paragraphen, Absätzen, Kapiteln, Abschnitten oder Seiten navigiert werden oder es können auch andere Steueraktionen durchgeführt werden, wie z.B. das Aufklappen von Hilfe- oder Kontextmenus oder zugeordneten Medien wie z.B. Audio oder Videodateien. Dadurch, dass die Eingabeschnittstelle nur bei einer definierten Betätigung der ersten und/oder zweiten Steuertaste aktiviert wird, behindert die Eingabeschnittstelle nicht die übliche Navigation des Eingabezeigers innerhalb des Wiedergabemediums.

Die Fernbedienung kommuniziert mit der Steuerung vorzugsweise über IR oder Bluetooth oder einen anderen Standard für eine drahtlose Datenübertragung. Sie kann aber auch kabelgebunden sein, wie es z.B. für Videokonsolen üblich ist.

Vorzugsweise ist die Steuerung mit einer Detektorschaltung verbunden, mit der die Betätigung der Steuertasten ermittelbar ist, und mit einer Aktivierungsschaltung, die in Abhängigkeit von dem zeitlich Verlauf der Betätigung der ersten und/oder zweiten Steuertaste die Eingabeschnittstelle aktiviert. Diese Schaltungen können z.B. integriert in der Steuerung ausgebildet sein. Auf diese Weise kann die Aktivierung der Eingabeschnittstelle leicht steuertechnisch realisiert werden.

Vorzugsweise weist die Fernbedienung vier Richtungstasten auf, von denen zwei zum Bewegen des Eingabezeigers zwischen den Zeilen und zwei zum Bewegen des Eingabezeigers in einer Zeile ausgebildet sind, wobei zwei der Richtungstasten oder alle vier Richtungstasten als erste und zweite Steuertaste zum Aktivieren der Eingabeschnittstelle fungieren können. Hier wird in einfacher Weise die übliche Konstellation der Steuertasten einer Fernbedienung verwendet, um die Eingabeschnittstelle zu aktivieren und somit dem Eingabezeiger zusätzliche Möglichkeiten für die Navigation zur Verfügung zu stellen.

Das Wiedergabemedium ist üblicherweise ein Bildschirm, kann jedoch auch ein Beamer oder dergleichen sein.

Die Eingabeschnittstelle befindet sich entweder ständig neben dem Eingabezeiger oder poppt bei einer definierten Betätigung der Fernbedienung neben dem Eingabezeiger auf. Es kann hierbei sogar vorgesehen sein, dass aufgrund der definierten Bedienung der Fernbedienung der Eingabezeiger bereits in die Eingabeschnittstelle springt. Dies ermöglicht es, die Eingabeschnittstelle mit einer geringstmöglichen Anzahl an Steuertastenbetätigungen (vorzugsweise einem Rücksprung des Eingabezeigers) zu aktivieren bzw. mit dem Eingabezeiger in die Eingabeschnittstelle zu gelangen. Der Eingabezeiger kann dann auf die bzw. auf den Eingabefelder(n) bewegt werden und ist dann dort navigierbar, um die gewünschte Steueraktion, insbesondere Navigationsaktion, auszuwählen.

Vorzugsweise wird die den Eingabefeldern zugeordnete Steueraktion in Abhängigkeit von dem auf dem Wiedergabemedium angezeigten Kontext konfiguriert. Die Steuerung hat hierfür vorzugsweise die Möglichkeit, den auf dem Wiedergabemedium angezeigten Kontext in einzelne Unterabschnitte, zum Beispiel Paragraphen, Absätze, Abschnitte oder Seiten, zu untergliedern und diese Untergliederung automatisch den Steueraktionen der Eingabeschnittstelle zuzuweisen. Auf diese Weise erfolgt die durch die Eingabeschnittstelle bereitgestellte zusätzliche Navigation immer kontextorientiert an dem gerade in dem Wiedergabemedium angezeigten Kontext. Die Analyse des Kontext kann direkt oder durch Hilfsdaten von einer anderen Datenbank oder mittels Indexdaten erfolgen.

Die Erfindung betrifft ebenfalls ein Verfahren zur Steuerung eines Eingabezeigers auf dem Wiedergabemedium einer visuellen Wiedergabeeinrichtung mittels einer Fernbedienung. Die Fernbedienung hat wenigstens eine erste Steuertaste, über deren Signal der Eingabezeiger in den Positionsfeldern um jeweils wenigstens eine Position in eine Richtung bewegt werden kann, und wenigstens eine zweite Steuertaste, über deren Signal der Eingabezeiger in den Positionsfeldern um jeweils wenigstens eine Position in die entgegengesetzte Richtung werden kann. Selbstverständlich kann der Eingabezeiger mit einer Betätigung der beiden Steuertasten auch um mehrere Positionen in einem Schritt bewegt werden.

Auf dem Wiedergabemedium wird laufend in unmittelbarer Nähe zum Eingabezeiger eine graphische Eingabeschnittstelle dargestellt, die dem Eingabezeiger vorzugsweise folgt. Vorzugsweise wird die Eingabeschnittstelle aktiviert, indem der Eingabezeiger nach dem Navigieren in eine Richtung in die Gegenrichtung bewegt wird. Hierdurch gelangt dann der Eingabezeiger auf die Eingabeschnittstelle.. Die Eingabeschnittstelle weist Eingabefelder auf, die mit einer Steueraktion für den Eingabezeiger verknüpft sind. Diese sind nach Aktivierung der Eingabeschnittstelle durch den Eingabezeiger navigierbar und/oder aktivierbar. Gemäß der Erfindung wird somit durch eine definierte Betätigung der ersten und/oder zweiten Steuertaste der Eingabezeiger auf die Eingabeschnittstelle bewegt, wobei diese aktiviert wird. Anschließend wird durch ein Navigieren des Eingabezeigers auf den Eingabefeldern der der Eingabeschnittstelle die dem Eingabefeld zugeordnete Steueraktion ausgelöst, was es erübrigt, für die Aktivierung der Steueraktion mittels der Eingabeschnittstelle eine zusätzliche Steuertaste auf der Fernbedienung vorzusehen. Dies ist insbesondere deswegen wünschenswert, weil Fernbedienungen heute eine Vielzahl von Funktionstasten aufweisen, deren Funktion von den Anwendern häufig nicht mehr verstanden wird. Die Reduktion der Anzahl dieser Funktionstasten reduziert auch die Kosten der Fernbedienung. Außerdem sind Hardware und Software in der Menge der möglichen Steuerungssignale beschränkt. Durch die Erfindung wird somit bei gegebenen hardwaretechnischen Konfigurationen von Fernbedienungen eine zusätzliche Funktionalität bereitgestellt, die zu einem wesentlich einfacheren und schnelleren Navigieren des Eingabezeigers auf dem Wiedergabemedium einer Wiedergabeeinrichtung geeignet ist oder zusätzliche Steueraktionen bereitstellt, die die Nutzung des auf dem Wiedergabemedium angezeigten Kontextes für den Anwender wesentlich vereinfacht oder verbessert.

Vorzugsweise wird die Eingabeschnittstelle derart auf dem Wiedergabemedium angezeigt, dass sie über eine einmalige Betätigung einer der beiden Steuertasten von dem Eingabezeiger navigierbar ist. Auf diese Weise kann man mit dem Eingabezeiger lediglich durch eine einmalige Bestätigung einer Steuertaste auf die Eingabefelder der Eingabeschnittstelle gelangen und dort eine Steueraktion starten, die insbesondere zu einer verbesserten Navigation des Eingabezeigers führt.

Selbstverständlich muss die Steueraktion nicht unbedingt eine Navigationsaktion sein, sondern kann auch durch eine andere Aktion gebildet sein, zum Beispiel durch Aufpoppen eines Hilfetextes oder eines Erläuterungstextes oder zusätzliche Informationen zu einem Thema, an dem Kontext, an welchem sich der Eingabezeiger gerade befindet.

Vorzugsweise wird daher der auf dem Wiedergabemedium angezeigte Kontext erfasst und die den Eingabefeldern zugeordnete Steueraktion wird in Abhängigkeit von diesem Kontext konfiguriert. Die Kontexterfassung ist hierbei entweder tatsächlich durch Analyse des Kontextes oder durch eine Indexierung des Kontexts möglich, welche der Steuerung zum Beispiel über den Datenzugriff des Kontextes zusätzlich bereitgestellt wird.

Vorzugsweise werden in diesem Fall die kontextbezogen konfigurierten Steueraktionen auf dem zugeordneten Eingabefeld angezeigt, so dass man direkt weiß, welche Steueraktion mit dem entsprechenden Eingabefeld der Eingabeschnittstelle verknüpft ist.

Vorzugsweise ist eine zugeordnete Steueraktion in diesem Sinn ein Absatzsprung, ein Kapitelsprung oder ein Seitensprung nach vorne oder zurück.

Es soll klargestellt sein, dass die oben beschriebenen Merkmale der Erfindung in beliebiger Weise miteinander verknüpfbar sind, und zwar sowohl die apparatetechnischen Merkmale als auch die softwaretechnischen Merkmale oder verfahrenstechnischen Merkmale.

Die Erfindung wird nachfolgend beispielsweise anhand der schematischen Zeichnung beschrieben. In dieser zeigt:
- Fig. 1: eine schematische Darstellung eines interaktiven TVs mit einer Fernbedienung und einer Eingabeschnittstelle,
- Fig.2: eine grafische Ausführungsform einer Eingabeschnittstelle, und
- Fig. 3: eine schematische Darstellung der Wechselwirkung zwischen Eingabezeiger und Eingabeschnittstelle.

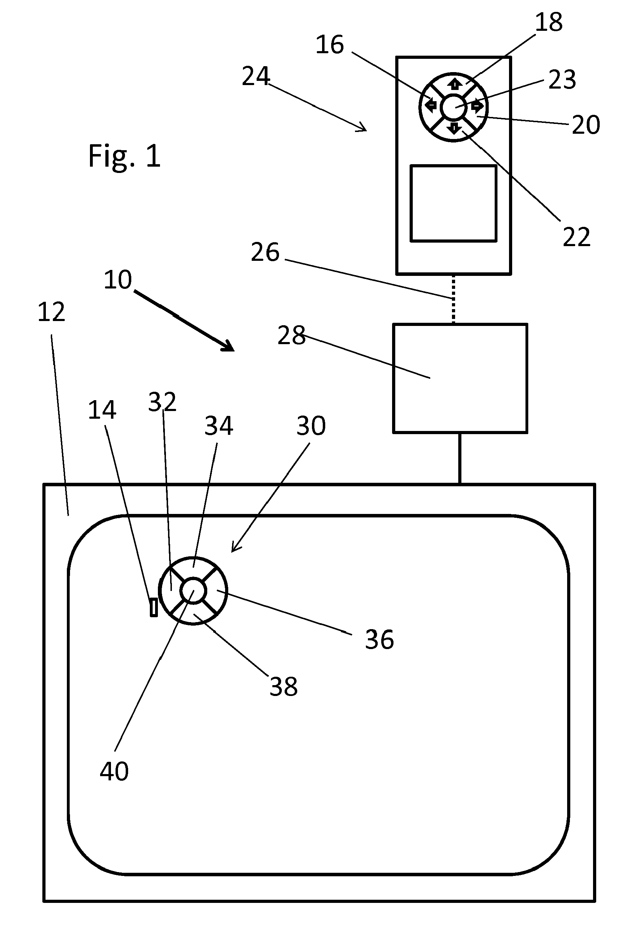

Fig. 1 zeigt eine visuelle Wiedergabeeinrichtung 10, zum Beispiel einen interaktiven Fernseher oder ein Smart-TV. Die visuelle Wiedergabeeinrichtung 10 enthält als Wiedergabemedium einen Bildschirm 12, in welchem als Eingabezeiger ein Cursor 14 mittels vier Richtungstasten 16, 18, 20, 22 einer Fernbedienung 24 steuerbar ist. Die Fernbedienung 24 kommuniziert z.B. über eine drahtlose Verbindung 26, zum Beispiel IR-Verbindung oder Bluetooth®-Verbindung oder kabelgebunden mit einer Steuerung 28 der visuellen Wiedergabeeinrichtung 10. Die Fernbedienung kann jedoch, insbesondere bei Spielekonsolen, auch kabelgebunden sein. Mit den vier Richtungstasten 16, 18, 20, 22 der Fernbedienung 24 ist der Cursor 14 auf dem Bildschirm 12 navigierbar, um dort in interaktiver Weise Eingaben vornehmen zu können. Durch die vier Richtungstasten 16, 18, 20, 22 der Fernbedienung 24 ist der Cursor 14 jeweils immer nur um eine Position nach vorne, hinten, rechts oder links bewegbar. Die Eingabeschnittstelle wird derart dargestellt, dass sie dem Eingabezeiger immer mit einem -Abstand einer Cursorbetätigung folgt. Wird jetzt nach dem Navigieren in eine erste Richtung, z.B. nach vorne anschließend die entgegengesetzte Richtungstasten gedrückt, so wird hierbei der Cursor durch den Rücksprung auf die ihm folgende Eingabeschnittstelle bewegt, wobei diese aktiviert wird. Die Eingabeschnittstelle 30 hat fünf Eingabefelder 32, 34, 36, 38, 40. Diesen Eingabefeldern 32 bis 40 sind unterschiedliche Steueraktionen zugeordnet, die insbesondere die Navigation des Cursors in dem auf dem Bildschirm 12 angezeigten Kontext betreffen. Nachdem also die Eingabeschnittstelle 30 durch einen einfachen Rücksprung des Cursors 14 mittels der Steuertaste 18 in die Eingabeschnittstelle hinein bewegt worden ist, kann er nun mittels der Richtungstasten auf den fünf Eingabefeldern bewegt werden. Die entsprechende Steueraktione wid dann vorzugsweisemit einer Aktivierungstaste 23 der Funkfernbedienung aktiviert. Die Steueraktionen können jedoch auch anderer Art sein, zum Beispiel die Darstellung von Hilfsinformationen oder von Information, die dem Kontext zugeordnet ist, an welchem sich der Cursor gerade befindet.

Vorzugsweise erfasst die Steuerung 28 den auf dem Bildschirm 12 angezeigten Kontext entweder durch dessen Analyse oder durch zugeordnete Index- oder Inhaltsdaten, die von anderer Stelle bereitgestellt werden. Hierdurch können den Eingabefeldern 32 bis 40 kontextbezogene Steueraktionen zugeordnet werden, die zum Beispiel ein sinnvolles Navigieren innerhalb des dargestellten Kontexts oder entsprechend andere sinnvolle Steueraktionen ermöglicht, zum Beispiel die Darstellung von zugeordneten Bildern oder Videos.

Durch die Erfindung wird somit zum einen ein wesentlich besseres Navigieren innerhalb eines auf dem Bildschirm 12 dargestellten Kontextes ermöglicht und zum anderen wird durch die kontextbezogene Zuordnung der Steueraktion zu den Eingabefeldern der Eingabeschnittstelle ein kontextoptimiertes Arbeiten an dem Bildschirm ermöglicht.

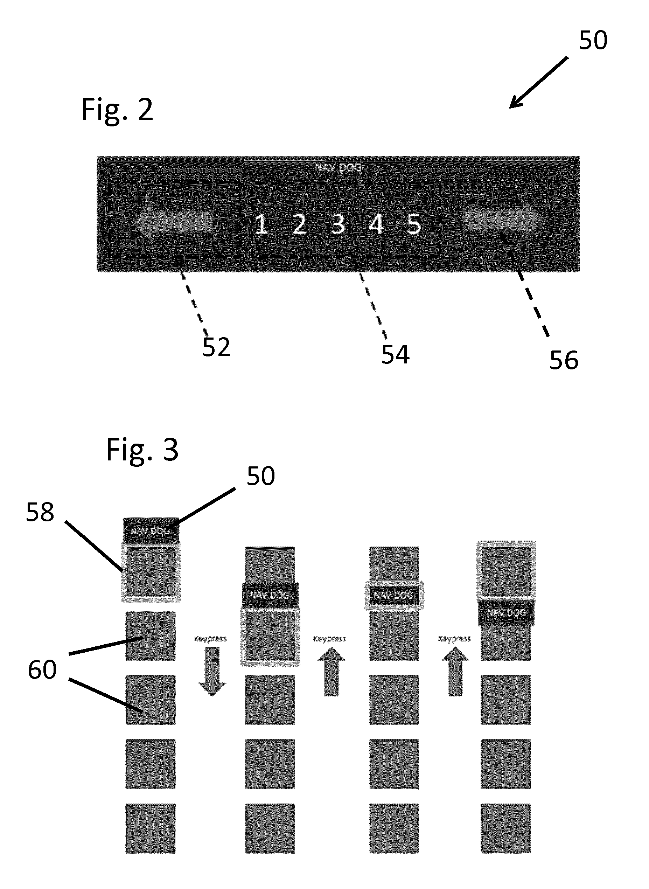

Fig. 2 zeigt eine mögliche graphische Ausgestaltung einer Eingabeschnittstelle 50, hier kurz NAV DOG genannt. Die Eingabeschnittstelle 50 hat ein linkes Navigationsfeld 52 mit einem zurück gerichteten Pfeil. Wenn der Eingabezeiger über dieses linke Navigationsfeld navigiert und eine Aktivierungstaste, z.B. "Ok", gedrückt wird, springt der Eingabezeiger im Mediencontent um eine Seite zurück. In dem mittleren Navigationsfeld 54 kann man direkt auf die einzelnen Seiten (oder Kapitel etc.) des Mediencontents springen. Das rechte Navigationsfeld 56 erlaubt es, mit dem Eingabezeiger um eine Seite nach vorne zu springen.

Fig. 3 zeigt, wie die Eingabeschnittstelle 50 in Form des Navigationsmenu's Nav Dog über einen Eingabezeiger 58 aktiviert wird, wenn dieser im Medieninhalt 60 rauf und runter navigiert.

In der linken Spalte wird der Eingabezeiger 58 nach unten bewegt, wobei das Navigationsmenu 50 folgt. In der zweitlinken Spalte ist der Eingabezeiger 58 auf einem Medieninhalt 60 weiter unten angekommen. Der Eingabezeiger wird jetzt zur Aktivierung des Navigationsmenus 50 zurück bewegt, wobei dieser auf das Navigationsmenu gelangt (zweitrechte Spalte). Wird der Eingabezeiger 58 nun durch Betätigung der entsprechenden Richtungstasten 16, 18, 20, 22 an der Fernbedienung 24 nach rechts oder links bewegt, so kann entsprechend der Navigationsfelder 52, 54, 56 in Fig. 2 im Medieninhalt 60 nach vorne und hinten bzw. zwischen den Seiten navigiert werden.

Wenn der Eingabezeiger weiter zurück bewegt wird, wie das in der rechten Spalte von Fig. 3 gezeigt ist, verlässt dieser wieder das Navigationsmenu 50 und dieses folgt dem Eingabezeiger 58 in Bewegungsrichtung.

Die Erfindung ist nicht auf das oben beschriebene Ausführungsbeispiel begrenzt, sondern kann innerhalb des Schutzbereichs der nachfolgenden Ansprüche variiert werden.

## Patentansprüche

1. Visuelle Wiedergabeeinrichtung (10) mit einem visuellen Wiedergabemedium (12), einer Steuerung (28), einer mit der Steuerung kommunizierenden Fernbedienung (24), mittels welcher ein Eingabezeiger (14) auf dem Wiedergabemedium zwischen Positionsfeldern steuerbar ist, wobei die Fernbedienung wenigstens eine erste Steuertaste (16, 18, 20, 22) hat, über deren Signal der Eingabezeiger in den Positionsfeldern um jeweils wenigstens eine Position in eine erste Richtung bewegt werden kann, und wenigstens eine zweite Steuertaste, über deren Signal der Eingabezeiger in den Positionsfeldern um jeweils wenigstens eine Position in eine zur ersten Richtung entgegengesetzte zweite Richtung bewegt werden kann,
wobei die Steuerung (28) eine Schaltung zur Darstellung einer graphischen Eingabeschnittstelle (30) in unmittelbarer Nähe zum Eingabezeiger auf dem Wiedergabemedium (12) hat, welche Eingabeschnittstelle einer Bewegung des Eingabezeigers folgt, welche Eingabeschnittstelle in Abhängigkeit von der Betätigung der ersten und/oder zweiten Steuertasten aktivierbar ist und Eingabefelder (32, 34, 36, 38, 40) aufweist, die mit einer Steueraktion für die Position des Eingabezeigers auf dem Wiedergabemedium verknüpft sind, welche Eingabefelder über die Bewegung des Eingabezeigers navigierbar und/oder aktivierbar sind.

2. Visuelle Wiedergabeeinrichtung (10) nach Anspruch 1, bei der die Steuerung (28) mit einer Detektorschaltung verbunden ist, mit der die Betätigung der Steuertasten ermittelbar ist, und mit einer Aktivierungsschaltung, die in Abhängigkeit von dem zeitlich Verlauf der Betätigung der ersten und/oder zweiten Steuertaste die Eingabeschnittstelle aktiviert.

3. Visuelle Wiedergabeeinrichtung (10) nach einem der vorhergehenden Ansprüche, bei der die Fernbedienung (24) eine Aktivierungstaste (23) aufweist, mittels der die einem Eingabefeld (32, 34, 36, 38, 40) der Eingabeschnittstelle (30) entsprechende Steueraktion für die Position des Eingabezeigers (14) aktivierbar ist, wenn sich der Eingabezeiger beim Drücken der Aktivierungstaste auf dem Eingabefeld befindet.

4. Visuelle Wiedergabeeinrichtung (10) nach einem der vorhergehenden Ansprüche, bei der die Wiedergabeeinrichtung ein Fernsehgerät, insbesondere ein interaktives Fernsehgerät ist.

5. Visuelle Wiedergabeeinrichtung (10) nach einem der vorhergehenden Ansprüche, bei der die Fernbedienung (24) kabellos ist..

6. Visuelle Wiedergabeeinrichtung (10) nach einem der vorhergehenden Ansprüche, bei der die Fernbedienung (24) vier Richtungstasten (16, 18, 20, 22) aufweist, von denen zwei (18, 22) zum Bewegen des Eingabezeigers (14) zwischen den Zeilen und zwei (16, 20) zum Bewegen des Eingabezeigers in einer Zeile ausgebildet sind, wobei zwei der Richtungstasten oder alle vier Richtungstasten als erste und zweite Steuertaste zum Aktivieren der Eingabeschnittstelle (30) fungieren können.

7. Visuelle Wiedergabeeinrichtung (10) nach einem der vorhergehenden Ansprüche, bei der das Wiedergabemedium (12) ein Bildschirm oder ein Beamer ist.

8. Visuelle Wiedergabeeinrichtung (10) nach einem der vorhergehenden Ansprüche, bei der die Eingabeschnittstelle (30) in einem Abstand einer einmaligen Betätigung einer Steuertaste (16, 18, 20, 22) von dem Eingabezeiger (14) entfernt darstellbar ist.

9. Visuelle Wiedergabeeinrichtung (10) nach einem der vorhergehenden Ansprüche, bei der die den Eingabefeldern (32, 34, 36, 38, 40) zugeordnete Steueraktion in Abhängigkeit von dem auf dem Wiedergabemedium (12) angezeigten Kontext konfigurierbar ist.

10. Verfahren zur Steuerung eines Eingabezeigers auf dem Wiedergabemedium (12) einer visuellen Wiedergabeeinrichtung (10) mittels einer mit einer Steuerung (28) der Wiedergabeeinrichtung kommunizierenden Fernbedienung (24), die wenigstens eine erste Steuertaste (16, 18, 20, 22) hat, über deren Signal ein Eingabezeiger (14) in den Positionsfeldern um jeweils wenigstens eine Position in eine erste Richtung bewegt werden kann, und wenigstens eine zweite Steuertaste (16, 18, 20, 22), über deren Signal der Eingabezeiger in den Positionsfeldern um jeweils wenigstens eine Position in die der ersten Richtung entgegengesetzte zweite Richtung bewegt werden kann, wobei auf dem Wiedergabemedium in unmittelbarer Nähe zum Eingabezeiger eine graphische Eingabeschnittstelle (30) dargestellt wird, die aktiviert wird, wenn die erste und/oder zweite Steuertaste in einer vorgegebenen Weise betätigt werden, welche Eingabeschnittstelle Eingabefelder (32, 34, 36, 38, 40) aufweist, die mit einer Steueraktion für den Eingabezeiger verknüpft sind, und die durch den Eingabezeiger navigierbar und über diesen aktivierbar sind.

11. Verfahren nach Anspruch 10, bei der die Eingabeschnittstelle (30) aktiviert wird, wenn die erste Steuertaste (16, 18, 20, 22), vorzugsweise innerhalb eines vorgegebenen Zeitfensters, vor oder nach der zweiten Steuertaste (16, 18, 20, 22) betätigt wird.

12. Verfahren nach Anspruch 10 oder 11, bei dem die Eingabeschnittstelle (30) derart auf dem Wiedergabemedium (12) angezeigt wird, dass sie über eine einmalige Betätigung einer der Steuertasten (16, 18, 20, 22) von dem Eingabezeiger (14) navigierbar ist.

13. Verfahren nach einem der Ansprüche 10 bis 12, bei dem der auf dem Wiedergabemedium (12) angezeigte Kontext analysiert wird und die den Eingabefeldern (32, 34, 36, 38, 40) zugeordnete Steueraktion in Abhängigkeit von dem Kontext konfiguriert wird.

14. Verfahren nach Anspruch 13, bei dem die kontextbezogen konfigurierte Steueraktion auf dem zugeordneten Eingabefeld (32, 34, 36, 38, 40) angezeigt wird.

15. Verfahren nach einem der Ansprüche 10 bis 14, bei dem die einem Eingabefeld (32, 34, 36, 38, 40) zugeordnete Steueraktion ein Absatzsprung, ein Kapitelsprung oder ein Seitensprung des Eingabezeigers in dem auf dem Wiedergabemedium angezeigten Kontext ist.
